# EUROPÄISCHE PATENTSCHRIFT

(11) **EP 2 247 442 B1**
(45) Veröffentlichungstag und Bekanntmachung des Hinweises auf die Patenterteilung: **14.12.2011**
(21) Anmeldenummer: 09711509.1
(22) Anmeldetag: 04.02.2009
(51) Int. Cl.: B32B 5/20, B32B 5/32, B32B 27/40, C08J 9/36, B32B 37/00

(54) **HOCHFLEXIBLES FLÄCHIGES VERBUNDMATERIAL**
HIGHLY FLEXIBLE FLAT COMPOSITE MATERIAL
MATÉRIAU COMPOSITE PLAN HAUTEMENT FLEXIBLE

(30) Priorität: 15.02.2008 DE 102008009192
(43) Veröffentlichungstag der Anmeldung: 10.11.2010
(73) Patentinhaber: Bayer MaterialScience AG, 51368 Leverkusen (DE)
(72) Erfinder: MEYER-AHRENS, Sven, 51375 Leverkusen (DE); MAIER-RICHTER, Andrea, 40699 Erkrath (DE); NAUJOKS, Manfred, 51519 Odental (DE); MICHAELIS, Thomas, 51375 Leverkusen (DE); MURATOVIC, Semka, 47906 Kempen (DE)
(74) Vertreter: Jönsson, Hans-Peter
(86) Internationale Anmeldenummer: PCT/EP2009/000714
(87) Internationale Veröffentlichungsnummer: WO 2009/100837

(56) Entgegenhaltungen:
- EP-A- 1 167 019
- WO-A-02/090413
- WO-A-2007/003348
- US-A- 4 254 177
- US-A- 5 294 386
- US-A- 5 859 081

## Beschreibung

Die Erfindung betrifft ein hochflexibles flächiges Verbundmaterial, umfassend einen Blockweichschaum und eine flächig damit verbundene Schicht aus Schlagschaum aus Dispersionen auf Polyurethanbasis, ein Verfahren zur Herstellung eines solchen Verbundmaterials sowie dessen Verwendung.

Verbundmaterialien, die eine auf Schlagschaum basierende Beschichtung aufweisen, sind im Stand der Technik hinlänglich bekannt. Zur Herstellung solcher Verbundmaterialien kommen wässrige Polyurethan- oder Acrylatdispersionen zur Anwendung, die zunächst durch intensives Rühren beziehungsweise Aufschlagen eine pastenähnliche Konsistenz erhalten. Der Vorgang ist der Herstellung von Schlagsahne sehr ähnlich. Aus diesem Grund ist auch der Begriff mechanischer Schlagschaum geläufig. Üblicherweise werden die Schäume mit einem Luftgehalt zwischen 20 und 80 Volumenprozent hergestellt. Die Dichte der Schäume wird als Schaumlitergewicht angegeben.

Obwohl die wässrigen Dispersionen allein schon leicht Schaum bilden, sind noch Zusätze zur Stabilisierung der Schäume, wie zum Beispiel Ammoniumstearat oder SLES erforderlich. Die Schäume können je nach Bedarf auch andere, in der Beschichtung übliche Zuschlagstoffe wie Farbpigmente, Additive, Wirkstoffe und Füllstoffe enthalten. Die eingesetzten Dispersionen sollten entsprechend hohe Feststoffgehalte aufweisen, damit ein ausreichendes Schaumlitergewicht erreicht werden kann. Üblich sind bei Polyurethandispersionen Feststoffgehalte von 40 bis 60 %.

Zur Erzeugung der Schäume werden kontinuierlich arbeitende, industrielle Schaumaggregate eingesetzt, wie sie auch in der Lebensmittelindustrie vorkommen. Der Auftrag des Schlagschaums erfolgt in der Regel mittels Rakel, die eingestellte Spaltbreite bestimmt weitgehend die Nassfilmdicke.

Die Schäume müssen bei höheren Temperaturen getrocknet werden, um gebrauchsfähige Beschichtungen zu erhalten. Um das im Schaum enthaltene Wasser zu entfernen, wird der Nassschaum in mehreren Stufen bei ansteigenden Temperaturen im Umluftstrom getrocknet, und zwar so, dass das Wasser nicht siedet und die Schaumstruktur nicht zerstört wird. Die Endtemperatur im Trocknungsvorgang liegt bei ca. 160 °C. Die getrockneten Schäume weisen geschlossenzellige oder offenzellige Strukturen, je nach eingesetztem Schaumlitergewicht, auf. Die Trockenfilmdicke ist normalerweise etwas geringer als die Nassfilmdicke.

Die Schichtdicken der Beschichtungen betragen 0,05 bis 1,0 mm, aber auch mehrere Millimeter sind möglich. Die Schäume sind sehr viel feiner als die üblichen bekannten Schäume, wie sie von Schwämmen und Schaumpolstern bekannt sind.

Zweck der Beschichtung mit Schaum ist die Volumengebung bei gleichzeitig geringem Materialverbrauch und Gewicht. Außerdem sind die Beschichtungen durch die Schaumstruktur sehr weich und angenehm in der Haptik. Daher kommen Schlagschäume bei der Bekleidung, in medizinischen und technischen Artikeln zum Einsatz, aber auch zur Herstellung lederartiger Materialien. In einigen Fällen muss der Schaum noch gegen Beschädigungen und auch aus Designgründen, mit weiteren, kompakten Schichten versehen werden. Der Vorteil des Einsatzes von Schlagschäumen liegt auch darin, dass diese emissionsfrei oder zumindest sehr emissionsarm zu verarbeiten sind.

Die Beschichtung eines Materials mit derartigen Schlagschäumen zur Ausbildung eines Verbundmaterials kann nun im Wesentlichen nach zwei Verfahren erfolgen:
- a): Bei der direkten Beschichtung wird der Schlagschaum durch geeignete Auftragsverfahren direkt mit dem Trägermaterial verbunden. Anschließend erfolgt eine Trocknung bei höheren Temperaturen im Bereich von 140 bis 170 °C über mehrere Minuten, um die Schlagschaumbeschichtung entsprechend zu verfestigen und die Gebrauchsfähigkeit herzustellen. Um ein unerwünschtes Eindringen des aufgetragenen Schlagschaummaterials in das Substrat während der Auftragung zu verhindern und geeignete Mengen anwenden zu können, wird die Viskosität und das Schaumlitergewicht so eingestellt, dass eine pastenähnliche Konsistenz vorliegt. Einfluss auf die Eindringtiefe hat neben dem Substrat auch die Art der Rakel, die die Auftragshöhe bestimmt sowie die Verweildauer bis zum Eintritt in den Trockenkanal.
- b): Bei der Umkehrbeschichtung (auch als Transferbeschichtung bzw. Release-(Paper-)Coating bezeichnet) wird die Schlagschaumbeschichtung zunächst auf ein Trennpapier aufgebracht, ausgehärtet und erst in einem zweiten Schritt mit dem zu beschichtenden Material verbunden. Anschließend kann nach Trocknung und festem Verbund der Beschichtung zum beschichteten Material das Trennpapier abgezogen und gegebenenfalls mehrfach wieder verwendet werden. Der Vorteil dieses Verfahrens liegt zum einen in der Möglichkeit, über eine Vorprägung des Trennpapiers der Beschichtung eine definierte Oberflächenstruktur, etwa eine Narbung zu geben. Zum anderen kann aber auch der Verbund zum Trägermaterial besser gesteuert werden als bei der Direktbeschichtung. Daher sind die so hergestellten Artikel oft wesentlich weicher.

Solche, eine auf Polyurethanen basierende Schlagschaumschicht umfassende Verbundmaterialien, wie sie aus dem Stand der Technik bekannt sind, weisen jedoch den Nachteil auf, dass sie für viele Anwendungen eine nicht ausreichende Flexibilität aufweisen. Insbesondere macht es sich bei vielen solcher Verbundmaterialien, wenn sie zum Beispiel zur Verkleidung beweglicher (Maschinen-) Teile verwendet werden, störend bemerkbar, dass sie im Laufe der Zeit Falten ausbilden, womit einem schnelleren Verschleiß solcher Verbundmaterialien Vorschub geleistet wird.

Die Herstellung hoher Schaumauflagen ist in WO 02/090413 A1 beschrieben. Verwendung finden hierfür ionische und/oder nichtionische hydrophilierte, wässrige Polyurethan-Polyharnstoff-Dispersionen auf Basis von Polycarbonatpolyolen und Polytetramethylenglykolpolyolen. Mit diesen können flexible Substrate insbesondere in nur einem Strich beschichtet werden.

US 4,254,177 beschreibt einen verbesserten Flammschutz von Gegenständen, welche einen durchlochten Kern aufweisen. Der Kern besitzt die gewünschten Eigenschaften des Endprodukts. Er wird umgeben von einer adhäsiven Schicht aus einem hydrophilen Polyurethanschaum, welcher große Mengen an Flammschutzmitteln aufweist.

Ein Polyurethan-Verbundschaumstoff und ein Verfahren zu dessen Herstellung sind in EP 1 167 019 A2 beschrieben. Der Polyurethanschaum umfasst eine erste Mischung aus einer organischen Isocyanatkomponente, einer Komponente mit einem reaktiven Wasserstoffatom, welche mit der Isocyanatkomponente reagiert, einer oberflächenaktiven Substanz und einem Katalysator. Diese erste Mischung wird auf eine vergleichbare zweite aufgeschäumte Mischung aufgetragen.

Die Herstellung von Schlagschäumen aus Polyurethan ist in US 5,859,081 A beschrieben. Die Schlagschäume ("froth foams") werden entweder frisch ("wet in wet") oder nach Aushärtung wenigstens einer der Schäume kombiniert.

US 5,294,386 A betrifft die Herstellung von Kissen umfassend ein Polster aus Polyurethan und eine textile Hülle. In eine Form wird zunächst die textile Hülle gelegt. Auf diese wird eine offenzellige Schaumstoffplatte gelegt und anschließend darauf eine flüssigkeitsdichte Schicht, beispielsweise Leim, gegeben. Die Form wird mit einer schäumenden Polyurethanmischung gefüllt, welche nach Schließen der Form expandiert und aushärtet.

Verbundschäume auf der Basis von Latex sind aus WO 2007/003348 A1 bekannt. Die Schaumstoffe können als Matratze oder Sitzkissen verwendet werden. Der Verbundschaum umfasst eine erste Schaumschicht, welche Latex enthält, und eine zweite Schicht, bei welcher der Schaum ausgewählt ist aus Polyolefin-, Polyurethan-, Polystyrol- oder Polyesterschaum oder visco-elastischem Latex oder Mischungen hiervon.

Es ist daher eine Aufgabe der vorliegenden Erfindung, ein eine Schicht eines auf Polyurethanen basierenden Schlagschaumes aufweisendes Verbundmaterial zur Verfügung zu stellen, dass die soeben beschriebenen Nachteile des Standes der Technik überwindet. Insbesondere ist es eine Aufgabe der vorliegenden Erfindung ein faltenfreies und ein über lange Zeiträume hinweg nichtfaltenbildendes Verbundmaterial zur Verfügung zu stellen, das die vorteilhaften Eigenschaften einer auf Polyurethan-Dispersionen basierenden Schlagschaumschicht beibehält, das heißt insbesondere eine angenehme Haptik und eine hohe Flexibilität.

Gelöst wird die der Erfindung zugrundeliegende Aufgabe durch ein flächiges Verbundmaterial aus mindestens zwei miteinander verbundenen Schaumstoffelementen, das dadurch gekennzeichnet ist, dass es ein Basismaterial eines Blockweichschaumes auf Polyurethanbasis und eine flächig damit verbundene Schicht aus Schlagschaum, welche voll- oder teilflächig perforiert ist, aus Dipersionen auf Polyurethanbasis umfasst.

Unter einem Blockweichschaum sind im Sinne der vorliegenden Erfindung solche auf Polyurethanen basierenden Weichschaumstoffe zu verstehen, welche gewöhnlich (aber nicht notwendigerweise) aus der Verwendung von Polyetherpolyolen mit überwiegend sekundären OH-Gruppen als Polyolkomponente resultieren. Ganz besonders bevorzugt werden als Blockweichschäume solche verwendet, wie sie nach dem in EP 0 810 256 A1 beschriebenen Verfahren erhältlich sind, wie zum Beispiel der von der Bayer MaterialScience AG entwickelte Hypernova^{®} Weichschaum. Auf diese Anmeldung wird insoweit voll umfänglich Bezug genommen. Bevorzugt ist der Blockweichschaum elastisch.

Der für die Auftragung der Schicht aus Schlagschaum verwendete Schlagschaum wird dabei wie oben allgemein beschrieben hergestellt. Der Schlagschaum wird dabei ausgehend von Polyurethan-Dispersionen hergestellt. In der Regel werden der (meist kommerziell erhältlichen) Polyurethandispersion vor der eigentlichen Aufschäumung noch jeweils ein oder mehrere Schaumstabilisator/en, Verdicker, Vernetzer und/oder Pigment/e zugesetzt. Während des Schäumungsprozesses, bei dem das gewünschte Schaumlitergewicht eingestellt wird, kann falls erforderlich noch zusätzlicher Verdicker zugesetzt werden.

Als Polyurethandispersionen kommen in Sinne der vorliegenden Erfindung besonders bevorzugt und gegebenenfalls in Kombination miteinander die folgenden zum Einsatz:
a) Anionische aliphatische Polyesterpolyurethandispersionen
   Unter diesen haben sich die folgenden von der Bayer MaterialScience AG vertriebenen Produkte besonders bewährt: Impranil^{®} LP RSC 1380, 1537, 1554.
b) Ionische/nichtionische Polycarbonatesterpolyurethan-Dispersionen
   Hier hat sich das folgende von der Bayer MaterialScience AG vertriebene Produkt als besonders bevorzugt herausgestellt: Impranil^{®} LP RSC 1997.
c) Aliphatische Polycarbonatesterpolyetherpolyurethan-Dispersionen Es hat sich insbesondere die folgende von der Bayer MaterialScience AG vertriebene Polyurethandispersion als besonders bevorzugt herausgestellt: Impranil^{®} DLU Dispersion.

Auf EP 1 669 382 A2 wird in diesem Zusammenhang vollumfänglich Bezug genommen. Die darin beschriebenen Dispersionen lassen sich ebenfalls vorteilhaft zur Herstellung von Schlagschäumen heranziehen.

Impranil^{®} DLU ist ein Polyurethan auf Basis Polycarbonat-Polytetramethylenglykol (PC-PTMG), das sich durch eine hohe Beständigkeit auszeichnet. Das Produkt ist mit den in der Textilbeschichtung üblicherweise verwendeten Additiven kompatibel und wurde zur Herstellung von hochwertigen Beschichtungen, zum Beispiel für Polstermaterial, entwickelt. Es lässt sich mechanisch verschäumen oder als Kompaktbeschichtung verarbeiten.

Bei den anderen vier Produkten handelt es sich um Weiterentwicklungen bereits bestehender Handelsprodukte, die einen erhöhten Festkörpergehalt von 60 % aufweisen.

Impranil^{®} LP RSC 1380 kann für die Herstellung von modischen Beschichtungen und zur Vliesausrüstung eingesetzt werden. Abgesehen vom höheren Festkörpergehalt sind die Produkteigenschaften ähnlich denjenigen von Impranil^{®} DLN. Impranil^{®} LP RSC 1537 - die Eigenschaften entsprechen denen von Impranil^{®} DLP-R - wurde vor allem als weiche Abmischkomponente zur Herstellung von Polstermaterialien, Autositzen, Sportartikeln und anderen technischen Produkten entwickelt. Impranil^{®} LP RSC 1537 eignet sich hervorragend als Haftstrich und stellt eine Alternative zu lösemittelhaltigen Produkten dar. Impranil^{®} LP RSC 1554 - das Produktprofil ist weitgehend identisch mit demjenigen von Impranil^{®} DLS - eignet sich insbesondere zur mechanischen Verschäumung und zur Herstellung von modischen Artikeln und Bekleidungswaren. Alle genannten Dispersionen sind nicht-reaktiv, lassen sich aber zur Verbesserung der Echtheiten entweder mit geeigneten Melaminharzen oder wasserdispergierbaren Polyisocyanaten covernetzen.

Hierbei handelt es sich um festkörperreiche 60 %ige Polyurethandispersionen. Alle Produkte sind frei von organischen Colösern, Verdickungsmitteln und externen Emulgatoren. Die "High-Solid"-Dispersionen bieten dem Endanwender im Vergleich zu den üblicherweise verwendeten Polyurethandispersionen mit Feststoffgehalten zwischen 35 und 50 % eine Reihe von Vorteilen, beispielsweise das Erreichen hoher Feststoffauflagen in einem Auftrag und dadurch bedingt eine deutliche Kosteneinsparung durch Erhöhung der Maschinenauslastung sowie eine Reduzierung der Energiekosten.

Als Schaumstabilisatoren, Verdicker, Vernetzer und Pigmente können die im Stand der Technik hinlänglich bekannten Produkte verwendet werden. Bevorzugt zum Einsatz kommen:

| | |
|---|---|
| Verdicker: | Borchigel^{®} ALA |
| | Mirox^{®} AM |
| | BYK^{®} 420 |

| | |
|---|---|
| Schaumstabilisatoren: | Stokal^{®} STA |
| | Stokal^{®} SR |
| | Dicrylan^{@} FLN |
| | Seife |
| Vernetzer: | Bayhydrur^{®} 3100 |
| | Desmodur^{®} DN |
| | Acrafix^{®} ML |
| Pigmente: | alle wasserlöslichen Euderm^{®}-Pigmente |

Verbunden werden können das Basismaterial des Blockweichschaumes und die Schicht aus Schlagschaum auf verschiedene Weisen. Neben (nur) punktuellen Befestigungen beider Schaumstoffmaterialien durch zum Beispiel Nähte,

Nieten oder Heftklammern kommt insbesondere eine punktuelle oder flächige Kleberschicht in Betracht.

Überraschend hat sich gezeigt, dass solche Verbundmaterialien die besonders günstigen Eigenschaften der es ausmachenden Bestandteile beibehält. Insbesondere sind solche Verbundmaterialien hoch flexible Gebilde, die auch bei längerem Gebrauch nicht zur Faltenbildung neigen.

Weiterhin ist es bei dem erfindungsgemäßen Verbundmaterial für einige Anwendungen vorteilhaft, wenn dieses wasserdampfdurchlässig ist. Dies kann zum einen dadurch erreicht werden, dass die (normalerweise) auf eine Schlagschaumschicht aufgetragene finale Deckschicht weggelassen wird, da die Schlagschaumschicht für sich alleine betrachtet schon eine gewisse Wasserdampfdurchlässigkeit besitzt. Um die Wasserdampfdurchlässigkeit noch weiter zu erhöhen, ist, die Schlagschaumschicht **voll- oder teilflächig** mit einer Perforation, und zwar insbesondere einer Mikroperforation zu versehen (siehe beispielsweise www.wista.com). Unter einer Mikroperforation ist dabei eine solche Perforation zu verstehen, welche Löcher mit einem Durchmesser in einem Bereich von 0,1 bis 2 mm und eine Lochdichte von 10 pin/cm² aufweist. Eine Mikroperforation ist dabei insofern bevorzugt, als sie sich durch eine überaus große Wasserdampfdurchlässigkeit auszeichnet, gegen flüssiges Wasser, das heißt insbesondere Wassertropfen, jedoch so gut wie undurchlässig ist, und damit einen Feuchtigkeitseintritt in die Blockschaumschicht zu unterbinden hilft.

Darüber hinaus liegt die Schichtdicke des Schlagschaumes bevorzugt in einem Bereich von 0,2 bis 1,0 mm, insbesondere von 0,5 bis 0,8 mm.

Die soeben beschriebenen Obergrenzen bei den Schichtdicken des Blockweichschaumes bzw. des Schlagschaumes sind insofern besonders begünstigt, als der Materialverbrauch dadurch auf ein Minimum begrenzt werden kann - oberhalb dieser Grenzen verbessern sich die mechanischen Eigenschaften des Verbundmaterials nämlich nicht mehr wesentlich. Die besagten Untergrenzen sind in insofern besonders bevorzugt, als sich die mechanischen Eigenschaften des Verbundmaterials bei einem Unterschreiten entsprechend verschlechtern, was insbesondere auf die Verschleißfestigkeit beider Schichten zutrifft.

Die Verbindung des Blockweichschaumes und des Schlagschaumes erfolgt bevorzugt durch eine unterbrochene oder ununterbrochene Kleberschicht, insbesondere durch eine Kleberschicht auf Basis einer wässrigen Polyurethandispersion wie z.B. Impranil LP RSC 4002 oder auch Impranil DLP-R.

Eine Kleberschicht sorgt dabei für eine permanente und verlässliche Verbindung beider Schaumstoffmaterialien. Eine Kleberschicht auf Basis einer wässrigen Polyurethandispersion hat dabei den besonderen Vorteil, dass die sich nach dem Verbund ausbildende Kleberschicht ebenfalls eine sehr hohe Flexibilität aufweist und damit die mechanischen Eigenschaften des Verbundmaterials nicht negativ beeinträchtigt.

In einer zweiten Ausführungsform wird die der Erfindung zugrundeliegende Aufgabe gelöst durch ein Verfahren zur Herstellung eines Verbundmaterials, das dadurch gekennzeichnet ist, dass man einen Blockweichschaum mit einer Schicht aus Schlagschaum verbindet.

Insbesondere führt man das Verfahren so durch, dass es die folgenden Schritte umfasst:
- a): voll- oder teilflächiges Auftragen eines Schlagschaumes, insbesondere eines Schlagschaumes mit einer Dichte in einem Bereich von 200 bis 800 g/L, auf ein Release-Paper;
- b): Aushärten der durch Schritt a) aufgetragenen Schlagschaumschicht, insbesondere bei erhöhter Temperatur in einem Bereich von 70 bis 170 °C, zur Ausbildung der Schicht des Schlagschaumes;
- c): Auftragen einer Kleberschicht, insbesondere einer Kleberschicht auf Basis einer wässrigen Polyurethandispersion auf die Schicht des Schlagschaumes und/oder des Blockweichschaumes;
- d): Aufbringen des Blockweichschaumes auf den Schlagschaum;
- e): Aushärten der Kleberschicht;
- f): Entfernen des Release-Papers.

Die zur Herstellung des Schlagschaumes in Schritt a) verwendeten Polyurethandispersionen weisen dabei bevorzugt einen Feststoffgehalt von ≥ 50 Massen-% auf, da sie den Vorteil haben, in jedem Verhältnis mit Wasser mischbar zu sein, schneller zu trocknen und ferner die Einstellung auch sehr hoher Schaumlitergewichte zu erlauben.

Das soeben beschriebene Verfahren führt zu einer verlässlichen und dauerhaften Verbindung beider Schaumstoffmaterialien und bietet darüber hinaus den Vorteil, dass durch die Verwendung eines Release-Papers eine Struktur in die vom Blockweichschaum abweisende Seite der Schlagschaumschicht eingebracht werden kann.

Besonders bevorzugt wird das obige Verfahren dabei so durchgeführt, dass die Schritte a) bis f) in einem Arbeitsgang durchgeführt werden. Durch den Wegfall mehrerer getrennter Arbeitsschritte werden die Prozesskosten entsprechend gemindert.

In einer dritten Ausführungsform wird die der Erfindung zugrundeliegende Aufgabe gelöst durch die Verwendung eines Verbundmaterials wie soeben beschrieben zur Verkleidung und/oder Ummantelung beweglicher oder unbeweglich Gegenstände und/oder Apparaturen. Auch kann es zum Beispiel als Möbel, Möbelauflage oder im Automobilbereich beispielsweise als Sitzbezug Verwendung finden.

## Patentansprüche

1. Flächiges Verbundmaterial aus mindestens zwei miteinander verbundenen Schaumstoffelementen, **dadurch gekennzeichnet, dass** es ein Basismaterial eines Blockweichschaumes **auf Polyurethanbasis** und eine flächig damit verbundene Schicht aus Schlagschaum, welche voll- oder teilflächig perforiert ist, aus Dispersionen auf Polyurethanbasis umfasst.

2. Verbundmaterial nach Anspruch 1, **dadurch gekennzeichnet, dass** die Schicht aus Schlagschaum mikroperforiert ist.

3. Verbundmaterial nach einem der Ansprüche 1 oder 2, **dadurch gekennzeichnet, dass** die Schichtdicke des Schlagschaumes in einem Bereich von 0,2 bis 1,0 mm, insbesondere von 0,5 bis 0,8 mm liegt.

4. Verbundmaterial nach einem der Ansprüche 1 bis 3, **dadurch gekennzeichnet, dass** der Blockweichschaum und der Schlagschaum durch eine unterbrochene oder ununterbrochene Kleberschicht, insbesondere einer Kleberschicht auf Basis einer wässrigen Polyurethandispersion, miteinander verbunden sind.

5. Verbundmaterial nach einem der Ansprüche 1 bis 4, **dadurch gekennzeichnet, dass** der Blockweichschaum elastisch ist.

6. Verfahren zur Herstellung eines Verbundmaterials nach einem der Ansprüche 1 bis 5, **dadurch gekennzeichnet, dass** man den Blockweichschaum mit der Schicht aus Schlagschaum verbindet.

7. Verfahren nach Anspruch 6, **dadurch gekennzeichnet, dass** man die folgenden Schritte durchführt:
a) Bereitstellen eines Release-Papers und voll- oder teilflächiges Auftragen eines Schlagschaumes, insbesondere eines Schlagschaumes mit einer Dichte in einem Bereich von 200 bis 800 g/L, auf dasselbe;
b) Aushärten der durch Schritt a) aufgetragenen Schlagschaumschicht, insbesondere bei erhöhter Temperatur in einem Bereich von 70-170 °C, zur Ausbildung der Schicht des Schlagschaumes;
c) Auftragen einer Kleberschicht, insbesondere einer Kleberschicht auf Basis einer wässrigen Polyurethandispersion, auf die Schicht des Schlagschaumes (auf der dem Release-Paper entgegengesetzten Seite) und/oder des Blockweichschaumes;
d) Aufbringen des Blockweichschaumes auf den Schlagschaum (mit der Kleberschicht dazwischen);
e) Aushärten der Kleberschicht;
f) Entfernen des Release-Papers.

8. Verfahren nach Anspruch 7, **dadurch gekennzeichnet, dass** die Schritte a) bis f) in einem Arbeitsgang durchgeführt werden.

9. Verwendung eines Verbundmaterials nach einem der Ansprüche 1 bis 5 zur Verkleidung und/oder Ummantelung beweglicher oder unbeweglicher Gegenstände, Apparaturen.

## Claims

1. Sheet composite material comprising at least two foam elements bonded to one another, **characterized in that** it comprises a base material of a block flexible foam based on polyurethane and, bonded thereto two-dimensionally, a whole- or part-areally perforated layer of whipped foam from dispersions based on polyurethane.

2. Composite material according to Claim 1, **characterized in that** the layer of whipped foam is microperforated.

3. Composite material according to either of Claims 1 and 2, **characterized in that** the layer thickness of the whipped foam is in a range from 0.2 to 1.0 mm and especially from 0.5 to 0.8 mm.

4. Composite material according to any one of Claims 1 to 3, **characterized in that** the block flexible foam and the whipped foam are bonded together via an interrupted or uninterrupted adhesive layer, especially an adhesive layer based on an aqueous polyurethane dispersion.

5. Composite material according to any one of Claims I to 4, **characterized in that** the block flexible foam is elastic.

6. Process for preparing a composite material according to any one of Claims 1 to 5, **characterized in that** the block flexible foam is bonded to the layer of whipped foam.

7. Process according to Claim 6, **characterized in that** the following steps are performed:
a) providing a release paper and whole- or part-areally applying a whipped foam, especially a whipped foam having a density in a range from 200 to 800 g/L, thereto;
b) curing the whipped foam layer applied by step a), especially at elevated temperature in a range of 70-170°C, to form the layer of whipped foam;
c) applying an adhesive layer, especially an adhesive layer based on an aqueous polyurethane dispersion, to the layer of whipped foam (on the side opposite the release paper) and/or of the block flexible foam;
d) applying the block flexible foam to the whipped foam (with the adhesive layer therebetween);
e) curing the adhesive layer;
f) removing the release paper.

8. Process according to Claim 7, **characterized in that** steps a) to f) are performed in one operation.

9. Use of a composite material according to any one of Claims 1 to 5 for cladding and/or sheathing moveable or immoveable objects, apparatuses.

## Revendications

1. Matériau composite plat constitué par au moins deux éléments de mousse assemblés, **caractérisé en ce qu'**il comprend un matériau de base d'une mousse souple à blocs, à base de polyuréthane, et une couche assemblée à plat avec celui-ci en mousse mécanique, qui est perforée sur toute sa surface ou une partie de celle-ci, en dispersions à base de polyuréthane.

2. Matériau composite selon la revendication 1, **caractérisé en ce que** la couche en mousse mécanique est microperforée.

3. Matériau composite selon l'une quelconque des revendications 1 ou 2, **caractérisé en ce que** l'épaisseur de couche de la mousse mécanique se situe dans une plage de 0,2 à 1,0 mm, en particulier de 0,5 à 0,8 mm.

4. Matériau composite selon l'une quelconque des revendications 1 à 3, **caractérisé en ce que** la mousse souple à blocs et la mousse mécanique sont assemblées l'une à l'autre par une couche d'adhésif interrompue ou ininterrompue, en particulier une couche d'adhésif à base d'une dispersion aqueuse de polyuréthane.

5. Matériau composite selon l'une quelconque des revendications 1 à 4, **caractérisé en ce que** la mousse souple à blocs est élastique.

6. Procédé pour la fabrication d'un matériau composite selon l'une quelconque des revendications 1 à 5, **caractérisé en ce qu'**on assemble la mousse souple à blocs avec la couche en mousse mécanique.

7. Procédé selon la revendication 6, **caractérisé en ce qu'**on réalise les étapes suivantes :
a) préparation d'un papier antiadhésif et application sur toute la surface ou une partie de celle-ci d'une mousse mécanique, en particulier d'une mousse mécanique présentant une densité dans une plage de 200 à 800 g/l, sur celui-ci ;
b) durcissement de la couche en mousse mécanique appliquée par l'étape a), en particulier à température augmentée dans une plage de 70-170°C, pour la formation de la couche en mousse mécanique ;
c) application d'une couche d'adhésif, en particulier d'une couche d'adhésif à base d'une dispersion aqueuse sur la couche en mousse mécanique (sur le côté opposé au papier antiadhésif) et/ou de mousse souple à blocs ;
d) application de la mousse souple à blocs sur la mousse mécanique (la couche d'adhésif étant située entre les deux) ;
e) durcissement de la couche d'adhésif ;
f) élimination du papier antiadhésif.

8. Procédé selon la revendication 7, **caractérisé en ce que** les étapes a) à f) sont réalisées dans un cycle de travail.

9. Utilisation d'un matériau composite selon l'une quelconque des revendications 1 à 5 pour revêtir et/ou enrober des objets mobiles ou immobiles, des appareils.
